# EUROPÄISCHE PATENTSCHRIFT

(11) **EP 3 239 362 B1**
(45) Veröffentlichungstag und Bekanntmachung des Hinweises auf die Patenterteilung: **25.11.2020**
(21) Anmeldenummer: 16167538.4
(22) Anmeldetag: 28.04.2016
(51) Int. Cl.: C25D 1/00, C25D 1/10, C25D 5/02, C25D 7/08, B44B 5/00, B44C 1/00, B42D 15/00, B42D 25/00, B32B 33/00, B32B 37/00, B32B 38/06, B44B 5/02, B42D 25/324, B42D 25/328, B42D 25/435, B42D 25/373

(54) **VERFAHREN ZUR ERZEUGUNG LICHTBEUGENDER STRUKTUREN AUF EINEM LAMINIERWERKZEUG**
METHOD FOR GENERATING LIGHT-BENDING STRUCTURES ON A LAMINATING TOOL
PROCEDE DE PRODUCTION DE STRUCTURES DE DIFFRACTION DE LA LUMIERE SUR UN OUTIL A STRATIFIER

(43) Veröffentlichungstag der Anmeldung: 01.11.2017
(73) Patentinhaber: VTT Verschleißteiltechnik GmbH, 30853 Langenhagen (DE)
(72) Erfinder: POST, Harry, 30900 Wedemark (DE); KÖTHER, Jan, 30161 Hannover (DE); DMOCHOWSKI, Michal, 30900 Wedemark (DE)
(74) Vertreter: Rehmann, Thorsten

(56) Entgegenhaltungen:
- EP-A1- 1 102 254
- EP-B1- 1 629 994
- WO-A1-99/26785
- DE-A1- 10 361 119

## Beschreibung

Die Erfindung betrifft ein Verfahren zur unmittelbaren Erzeugung lichtbeugender Strukturen auf einem Laminierwerkzeug mit einer Oberseite, deren Oberfläche als Referenzebene definiert wird.

Zur Erhöhung der Fälschungssicherheit von Dokumenten und Karten mit erhöhten Sicherheitsanforderungen wie beispielsweise Personalausweise, Reisepässe oder Führerscheine werden seit längerer Zeit Hologramme verwendet. Diese Hologramme werden üblicherweise als Zukaufteil von Lieferanten angeboten, die selbst nicht Hersteller dieser Dokumente oder Karten sind. Das Herstellen von Hologrammen selbst ist aufwendig und teuer, darüber hinaus ist auch das nachträgliche Aufbringen des Hologramms auf beispielsweise eine Karte aufgrund vieler Prozessschritte unwirtschaftlich.

Eine Möglichkeit das Hologramm auf eine Karte aufzubringen besteht darin, die Karte zunächst einzulaminieren und im Anschluss das separate Hologramm auf die Karte aufzukleben. Alternativ kann eine Overlay-Folie, die bereits das Hologramm aufweist, auf die Karte aufgebracht werden. Dadurch, dass das Hologramm bislang immer in einem zusätzlichen Herstellungsschritt mit der Karte verbunden wird, wird die Fälschungssicherheit reduziert. Insbesondere die präzise Platzierung eines Hologramms auf eine bereits einlaminierte Karte ist stets mit Toleranzen behaftet, sodass innerhalb dieser Toleranzen angefertigte Fälschungen nicht zwingend erkannt werden können. Ebenso stellt die Klebestelle eines Hologramms eine Schwachstelle für die Fälschungssicherheit dar. Es ist daher wünschenswert, Dokumente herstellen zu können, die möglichst fälschungssicher sind, um Folgeschäden durch Fälschungen zu vermeiden.

Die WO 99/26785 betrifft ein Verfahren zur Herstellung von Hologrammen in einem Material wie Aluminium oder anderen Hartmetallsubstraten ohne vorheriges Aufwärmen oder Aufweichen des Materials. Dazu wird ein Laminierwerkzeug von Grund auf aufgebaut. Zunächst wird ein Fotoresistlack mit lichtbeugenden Strukturen hergestellt. Der Fotoresistlack wird anschließend mit Silber beschichtet. Dann wird Nickel auf die Silberschicht elektrochemisch abgeschieden. Der so erstellte negative Master aus Silberschicht und Nickelabscheidung wird vom Fotoresistlack getrennt. Eine aus Nickel mittels Galvanoabscheidung gebildete positive Kopie des negativen Masters bildet dann das Stempelwerkzeug zum Herstellen der Hologramme.

Die EP 1 629 994 B1 betrifft ein Verfahren zur Herstellung eines Prägeblechs mit dreidimensionaler Struktur zur Herstellung von Dokumenten mittels einer Heiß-Kalt-Laminierpresse. Bei dem Verfahren wird auf ein Laminierwerkzeug zunächst eine Fotomaske aufgebracht, die anschließend belichtet wird. An den belichteten Stellen werden Aussparungen erzeugt, wobei in den Aussparungen wiederum Galvanoabscheidungen, beispielsweise aus Nickel, erzeugt werden, in die abschließend lichtbeugende Strukturen eingeätzt werden. Nachteilig daran ist, dass zunächst eine großflächige Galvanoabscheidung erzeugt werden muss, die in einem nächsten Schritt wieder zum Großteil entfernt werden muss. Dies führt zu einem erhöhten Zeit- sowie Materialaufwand bei der Herstellung.

Die EP 1 102 254 A1 betrifft ein Verfahren zur Herstellung eines Stempelwerkzeugs zum Herstellen eines Substrats mit Nuten, beispielsweise eines Hologramms, bei dem Galvanoabscheidung genutzt wird. Ein Mastersubstrat für die Galvanoabscheidung wird dadurch erzeugt, dass ein Fotoresistfilm auf ein Glassubstrat aufgebracht wird und die Nuten darin mittels eines Lasers bis zu einer Oberfläche des Glassubstrates hindurch erzeugt werden.

Die DE 103 61 119 A1 betrifft ein Verfahren zur Herstellung eines metallischen Körpers, insbesondere einer Spritzgussform, bei dem Metall durch galvanische Abscheidung auf Stellen des Rohlings aufgebracht wird, die zuvor mittels eines Lasers von einer UV-härtbaren Lackschicht auf dem Rohling freigelegt wurden.

Der Erfindung liegt die Aufgabe zu Grunde ein Verfahren zur Erzeugung lichtbeugender Strukturen auf einem Laminierwerkzeug mit einer Oberseite, deren Oberfläche als Referenzebene definiert wird, so zu verbessern, dass Dokumente und Karten mit erhöhten Sicherheitsanforderungen fälschungssicher ausgestaltet werden können und dabei die Nachteile aus dem Stand der Technik vermindert werden.

Die Erfindung löst dieses Problem durch Verfahren nach den Ansprüchen 1 oder 2, die sich dadurch auszeichnen, dass die Strukturen ausschließlich durch galvanisches Aufbringen von mindestens zwei Metallschichten auf die Oberseite erzeugt werden.

Dadurch wird vorteilhafterweise erreicht, dass zur Erzeugung eines Hologramms kein separates Hologramm mehr angefertigt werden muss. Durch das erfindungsgemäße Verfahren wird ein Laminierwerkzeug so verändert, dass das Hologramm durch einen Abdruck der lichtbeugenden Strukturen auf einer Karte direkt erzeugt wird. Damit ist das Anbringen eines Hologramms auf eine Karte unmittelbar in den Herstellungsprozess integriert, wodurch mehrere Herstellungsschritte eingespart und die Herstellungskosten dadurch reduziert werden können. Ein zusätzliches Anbringen des Hologramms ist nicht mehr erforderlich, wodurch eine äußerst präzise Positionierung des Hologramms auf einer Karte vorgenommen werden kann. Weiterhin vorteilhaft ist die Erzeugung der lichtbeugenden Strukturen durch ausschließlich galvanisches Aufbringen mindestens einer ersten Metallschicht auf die Oberseite. Dies führt dazu, dass das abzuscheidende Material nur dort abgeschieden wird, wo es benötigt wird. Nach Abschluss des galvanischen Aufbringens liegen die lichtbeugenden Strukturen damit vollständig hergestellt vor, sodass keine weiteren Prozessschritte notwendig sind. Dadurch kann der Herstellungsprozess beschleunigt und die Material- sowie Herstellungskosten reduziert werden.

Die lichtbeugenden Strukturen müssen nicht zwingend auf der Oberseite des Laminierwerkzeugs erzeugt werden. Das erfindungsgemäße Verfahren gestattet es ebenso diese Strukturen optional oder zusätzlich auf der gegenüberliegenden Unterseite des Laminierwerkzeugs zu erzeugen.

Im Rahmen der vorliegenden Beschreibung wird unter einem Laminierwerkzeug insbesondere ein Werkzeug verstanden, das beim Einlaminieren von beispielsweise einer Karte mit erhöhten Sicherheitsanforderungen eine Prägung auf beispielsweise einer auf der Karte aufgelegten Laminierfolie erzeugt. Bei dem Laminierwerkzeug kann es sich um ein Laminierblech, eine Laminierwalze, ein Laminierband oder einen Teil eines Bandes handeln. Die Laminierbleche können aus verschiedenen Materialien bestehen, wie beispielsweise aus austhenitischem oder ferritischem Stahl. Ebenso ist die Verwendung von galvanisch hergestellten Blechen, insbesondere aus Nickel, möglich. Das Laminierwerkzeug kann auch bereits vor Durchführung des erfindungsgemäßen Verfahrens über erhabene oder vertiefte Strukturen im Mikrometerbereich oder größer auf der Oberfläche verfügen. Dann kann die Oberfläche dieser Strukturen als Referenzebene definiert werden. Unter einer Metallschicht wird im Rahmen der vorliegenden Beschreibung keine flächendeckende geschlossene Schicht im eigentlichen Sinne verstanden, sondern eine Lage aus Metallabscheidungen, die so erzeugt werden, dass die lichtbeugenden Strukturen entstehen. Die Summe aller lichtbeugenden Strukturen, die in einem Abscheidungsvorgang erzeugt wurden, bilden also die Metallschicht.

Gemäß einer erfindungsgemäßen Ausführungsform der Erfindung sind die Strukturen linienförmige Erhöhungen, die gegenüber der Referenzebene unterschiedliche Höhen von 100 bis 3.500 nm, bevorzugt von 200 bis 600 nm, aufweisen. Gemäß einer alternativen erfindungsgemäßen Ausführungsform sind die Strukturen linienförmige Vertiefungen, deren seitliche Begrenzungswände gegenüber der Referenzebene unterschiedliche Höhen von 100 bis 3.500 nm, bevorzugt von 200 bis 600 nm, aufweisen. Aufgrund der unterschiedlichen Höhen können unterschiedliche Effekte bei der Lichtbeugung erzeugt werden, wodurch die Fälschungssicherheit weiter erhöht wird. Die linienförmigen Erhöhungen bzw. Vertiefungen können in jeder beliebigen Form erzeugt werden. Sie können beispielsweise gerade, gezackt, kreisförmig, dreieckig, sternförmig oder wellig ausgestaltet sein. Ebenso ist es möglich und gemäß einer bevorzugten Ausführungsform vorgesehen, Kombinationen aus unterschiedlichen Geometrien, geometrischen Figuren und/oder Linienwerken herzustellen.

Bei einer weiteren Ausgestaltung der Erfindung beträgt die Breite der Strukturen 500 nm bis 10 µm. Die Breite muss dabei nicht konstant bei allen Strukturen sein, die Breite kann ebenso von Struktur zu Struktur unterschiedlich sein.
Die linienförmigen Erhöhungen werden erzeugt, indem:
a) die Oberfläche zunächst mit einem Fotoresistlack beschichtet wird,
b) mittels eines Laserstrahls der Fotoresistlack linienförmig belichtet wird,
c) die belichteten Linien in einem Entwicklungsbad entwickelt werden und bis auf die Oberfläche an den Stellen entfernt werden, an denen Strukturen ausgebildet werden sollen,
d) anschließend die entwickelten Linien galvanisch mit einer ersten Metallschicht beschichtet werden,
e) nach der ersten Beschichtung die Oberseite erneut mit einem Fotoresistlackbeschichtet wird,
f) mittels eines Laserstrahls der Fotoresistlack zumindest bei einem Teil der linienförmig aufgebrachten ersten Metallschicht belichtet wird,
g) die belichteten linienförmigen Bereiche in einem Entwicklungsbad entwickelt werden,
h) anschließend die entwickelten linienförmigen Bereiche mit einer zweiten Metallschicht galvanisch beschichtet werden und
i) die Schritte e) bis h) so oft wiederholt werden, bis eine positive Struktur vollständig aufgebaut ist.

Die linienförmigen Vertiefungen werden dadurch erzeugt, indem:
a) die Oberfläche zunächst mit einem Fotoresistlack beschichtet wird,
b) mittels eines Laserstrahls der Fotoresistlack linienförmig belichtet,
c) die belichteten Stellen in einem Entwicklungsbad entwickelt werden und bis auf die Oberfläche entfernt werden, wobei an den Stellen, an denen die Strukturen ausgebildet werden sollen, der Fotoresistlack nicht entfernt wird,
d) anschließend die entwickelten Stellen galvanisch mit einer ersten Metallschicht beschichtet werden,
e) nach der ersten Beschichtung die Oberseite erneut mit einem Fotoresistlack beschichtet wird,
f) mittels eines Laserstrahls der Fotoresistlack zumindest bei einem Teil der aufgebrachten ersten Metallschicht belichtet wird,
g) die belichteten Bereiche in einem Entwicklungsbad entwickelt werden,
h) anschließend die entwickelten Bereiche mit einer zweiten Metallschicht galvanisch beschichtet werden und
i) die Schritte e) bis h) so oft wiederholt werden, bis eine negative Struktur vollständig aufgebaut ist.

Mittels des Laserstrahls kann die Fotoresistlack-Beschichtung äußerst präzise belichtet werden. Die vorgegebenen Stellen, an denen später die lichtbeugenden Strukturen erzeugt werden, können durch Belichtung und Entwicklung des Fotoresistlacks durch das Laserlicht beliebig ausgestaltet werden. Das Laserlicht muss nicht zwingend orthogonal zur Oberfläche ausgerichtet sein, es ist ebenso möglich und auch in einer bevorzugten Ausführungsform vorgesehen, dass das Laserlicht schräg auf den Fotoresistlack trifft, um beliebig geformte Ausnehmungen in dem Fotoresistlack zu erzeugen, beispielsweise in einer Dreiecksform. Eine derartige Form erhöht zum einen aufgrund ihrer Komplexität und zum anderen durch die charakteristischen Lichtbeugungseffekte die Fälschungssicherheit.

Es hat sich herausgestellt dass ein Pikosekundenlaser aufgrund der modularen Bauweise und der Energieausbeute zur Durchführung des erfindungsgemäßen Verfahrens von Vorteil ist. Zum Belichten hat es sich von Vorteil erwiesen, Wellenlängen im Bereich von 350-550nm zu verwenden. Es können auch mehrere Laser verwendet werden, die mit unterschiedlichen Wellenlängen und/oder Fokuslagen den Fotoresistlack belichten.

Damit mittels des Laserlichts der Fotoresistlack bis auf die Oberfläche des Laminierwerkzeugs entfernt werden kann und gleichzeitig die gewünschte Breite oder eine mit der Höhe der Struktur verändernde Breite erzielt werden kann, empfiehlt es sich im Vorfeld die Fokuslage des Laserstrahls zu bestimmen. Alternativ oder zusätzlich kann auch die Anzahl der Belichtungsvorgänge durch den Laser, um zur Oberfläche des Laminierwerkzeugs durchzudringen, bestimmt werden. Wenn beispielsweise unterschiedliche Höhen realisiert werden sollen, kann mehrfach belichtet und nach jedem Belichtungsvorgang beschichtet werden.

Dabei empfiehlt es sich, den Wirkungsgrad des Lasers insbesondere in der Peripherie der Fokuslage zu berücksichtigen und das Verfahren darauf abzustimmen.

Unter der Fokuslage wird die Position mit der höchsten Intensität im Laserstrahl verstanden, bei der die geringste Breite einer Struktur bei der kleinsten Anzahl von Laserbelichtungszyklen erzeugt werden kann.

Nachdem die entwickelten Linien galvanisch mit einer ersten Metallschicht beschichtet wurden, wird der übriggebliebene Fotoresistlack von der Oberfläche des Laminierwerkzeugs entfernt. Das auf diese Weise hergestellte Laminierwerkzeug kann im Anschluss zur Laminierung eingesetzt werden.

Durch die Wiederholung der Verfahrensschritte zum Erzeugen von linienförmigen Erhöhungen können beliebig ausgestaltete lichtbeugende Strukturen äußerst präzise erzeugt werden. Die gewünschte Form der aktuellen metallischen Abscheidung kann dadurch bildlich gesprochen auf die Metallabscheidung des vorhergehenden Abscheidevorgangs aufgesetzt werden.

Es ist ebenso möglich und stellt eine bevorzugte Ausführungsform dar, die Form der Strukturen durch weitere Parameter wie beispielsweise der Höhe des zugeführten Stromes im elektrolytischen Bad und/oder der Baddauer zu verändern.

Nach der Behandlung des Bleches im galvanischen Bad, wird der Rest des Resistes mit einer Stripperlösung entfernt. Abschließend kann vorteilhafterweise eine Schicht Glanznickel oder eines anderen geeigneten Materials aufgebracht werden, um die Oberflächengüte zu erhöhen und eine Verfestigung der Strukturen zu erreichen. Es ist ebenso von Vorteil die lichtbeugenden Strukturen mit einer nicht metallischen, aber optisch transparenten Schutzschicht zu schützen. Dies kann beispielsweise durch eine Folie oder einen Lack erreicht werden.

Vorteilhafterweise können mit dem Verfahren zum Erzeugen von linienförmigen Vertiefungen durch Wiederholen der Schritte e) bis h) im Vergleich zum Verfahren zum Erzeugen von linienförmigen Erhöhungen durch Belichten des Fotoresistlacks zunächst die Strukturen erzeugt werden, die den späteren Rand der galvanisch aufgebauten Struktur bilden. Es ist damit in gewissem Rahmen sogar möglich und stellt eine bevorzugte Ausführungsform der Erfindung dar, Hinterschneidungen an den lichtbeugenden Strukturen zu erzeugen, indem die belichtete Grundfläche mit jeder zusätzlich aufgebauten Schicht verkleinert wird.

Bei einer weiteren vorteilhaften Ausgestaltung der Erfindung werden die Strukturen parallel zueinander in einem Abstand von 3 bis 20 µm erzeugt. Je dichter die Strukturen beieinanderliegen, desto besser ist die optische Wirkung des Hologramms. Besonders vorteilhaft ist daher, wenn der Abstand der Strukturen weniger als 3 µm, insbesondere weniger als 1 µm beträgt. Um eine möglichst gute optische Wirkung des Hologramms zu erhalten, werden die Strukturen vorteilhafterweise parallel zueinander erzeugt. Dies soll jedoch nicht ausschließen, dass auch nicht parallel zueinander erzeugte Strukturen Anwendung finden können. Es können beispielsweise auch Abschnitte von parallel zueinander erzeugten Strukturen vorliegen, die sich mit Abschnitten von dazu versetzt angeordneten Abschnitten paralleler Strukturen und/oder beliebig zueinander angeordneten Strukturen abwechseln. Die Anordnung der lichtbeugenden Strukturen kann von Struktur zu Struktur und/oder zwischen Abschnitten von Strukturen frei gewählt werden. Vorzugsweise wird der Fotoresistlack in einer Schichtdicke von weniger als 10 µm aufgebracht. Insbesondere weist der Fotoresistlack eine Schichtdicke von weniger als 1 µm auf. Weiterhin bevorzugt ist die Schichtdicke des Fotoresistlacks homogen, um mit der voreingestellten Fokuslage des Laserstrahls immer und unabhängig der Belichtungsstelle dasselbe Ergebnis zu erhalten.
Nach einer vorteilhaften Ausgestaltung der Erfindung erfolgt die Beschichtung mit Fotoresistlack in einem Tauchbad. Ebenso möglich ist, das Spincoater-Verfahren hierfür zu verwenden, welches zwar aufwendiger in der Durchführung ist, wodurch aber eine homogene Schichtdicke erzeugt werden kann.

Gemäß einem nicht erfindungsgemäßen Aspekt sieht das Laminierwerkzeug zur Herstellung von Sicherheitsdokumenten mittels Oberflächenprägens, das auf seiner Oberseite einen Bereich mit lichtbeugenden Strukturen aufweist, vor, dass die lichtbeugenden Strukturen linienförmig verlaufen und von einer Oberfläche der Oberseite ausgehend ausschließlich in einer positiven Richtung verlaufen, also ausschließlich erhaben von der Oberfläche hervorstehen, wobei die linienförmigen Strukturen parallel zueinander in einem Abstand zwischen 3 und 20 µm verlaufen. Die Abstände der Strukturen können dabei auch untereinander variieren.

Mit dem Laminierwerkzeug können Abdrücke der lichtbeugenden Strukturen beispielsweise auf ein Laminat wie eine Laminierfolie eingeprägt werden, nachdem die Folie auf ein Sicherheitsdokument wie beispielsweise ein Personalausweis oder Führerschein aufgelegt wurde. Dadurch können Hologramme bereits beim Einlaminieren des Sicherheitsdokuments erzeugt werden, weitere Herstellungsschritte können dadurch vorteilhafterweise entfallen. In anderen Worten wird ein Negativabdruck der lichtbeugenden Strukturen auf dem Laminat erzeugt.

Die Strukturen des Laminierwerkzeugs weisen eine unterschiedliche Höhe auf. Bei einer bevorzugten Ausführungsform des Laminierwerkzeugs weisen die Strukturen in sich unterschiedliche Höhen auf.

Die Höhe der linienförmigen Strukturen beträgt zwischen 100 und 3.500 nm, bevorzugt zwischen 200 und 600 nm. Die Breite der linienförmigen Strukturen liegt zwischen 350 nm und 10 µm, bevorzugt zwischen 500 nm und 10 µm.

Im Folgenden wird die Erfindung anhand von Ausführungsbeispielen näher erläutert. Es zeigen:
- Figur 1: - prinzipielle Erzeugung einer ersten Metallschicht,
- Figur 2: - prinzipielle Erzeugung einer zweiten Metallschicht auf der ersten Metallschicht gemäß Figur 1,
- Figur 3a bis h: - beispielhafte Ausgestaltungen von lichtbeugenden Strukturen in einer Draufsicht und
- Figur 4a bis c: - beispielhafte Ausgestaltungen von lichtbeugenden Strukturen in einer Querschnittsansicht.

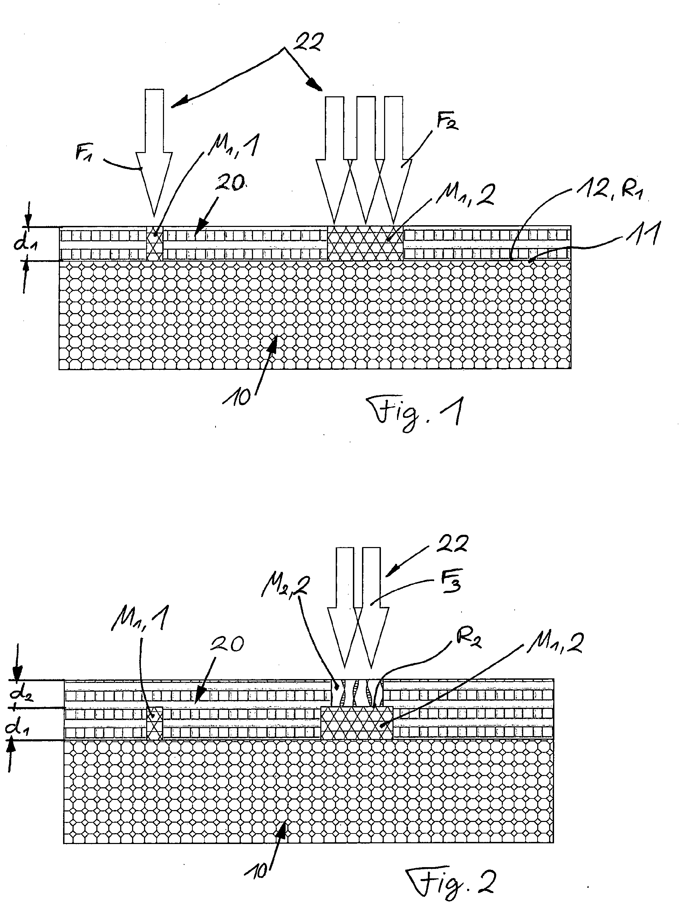

In Figur 1 ist ein Laminierwerkzeug 10, vorliegend als Laminierblech, ausschnittsweise und im Querschnitt dargestellt. Das Laminierwerkzeug 10 weist eine Oberseite 11 auf, deren Oberfläche 12 eine erste Referenzebene R₁ darstellt. Auf der Oberfläche 12 des Laminierwerkzeugs 10 befindet sich eine Schicht aus Fotoresistlack 20, die zuvor beispielsweise durch Eintauchen des Laminierwerkzeugs 10 in ein Tauchbad oder im Spincoater-Verfahren aufgebracht wurde. Der Fotoresistlack 20 weist eine Schichtdicke d₁ auf, welche vorzugsweise kleiner als 10 µm ist. Der Fotoresistlack 20 wird mittels eines Laserstrahls 22 belichtet und bis auf die Referenzebene R₁ entfernt. An der links dargestellten Belichtungsstelle weist der Laserstrahl eine Fokuslage F₁ auf, die zu der Fokuslage F₂, der rechts dargestellten Stelle, verschieden ist. Die Belichtung erfolgt in Blattebene hinein und linienförmig. Nach der Belichtung werden die belichteten Linien in einem hier nicht dargestellten Entwicklungsbad entwickelt und anschließend galvanisch mit einer ersten Metallschicht M₁ beschichtet. An den Stellen, an denen der Fotoresistlack 20 mittels des Laserstrahls 22 belichtet wurde, entsteht in der Form, wie der Fotoresistlack 20 entfernt wurde, die Metallschicht M₁.

Die Metallschicht M₁ entspricht unmittelbar den gewünschten lichtbeugenden Strukturen 1, 2. Nachdem die lichtbeugenden Strukturen 1, 2 erzeugt wurden, kann der übriggebliebene Fotoresistlack 20 mit einer sogenannten Stripperlösung entfernt werden, übrig bleiben dann die galvanisch auf der Oberfläche 12 des Laminierwerkzeugs 10 erzeugten lichtbeugenden Strukturen 1, 2.

In Figur 2 ist eine Fortführung des in Figur 1 dargestellten Verfahrens gezeigt, bei dem eine zweite Metallschicht M₂ auf der bereits vorhandenen ersten Metallschicht M₁ erzeugt wird. Dabei kann die erste Schicht des Fotoresistlacks 20 mit der Schichtdicke d₁ erhalten bleiben und eine weitere Schicht der Dicke d₂ des Fotoresistlacks 20 aufgebracht werden. Es kann aber auch die vorherige Schicht des Fotoresistlacks 20 entfernt werden und eine neue Schicht der kumulierten Dicke d₁ und d₂ aufgebracht werden. Die Schichtdicken d₁ und d₂ sind wie dargestellt unterschiedlich. Damit durch die Belichtung mittels des Laserstrahls 22 eine weitere Metallschicht M₂ auf der bisherigen Metallschicht M₁ in der gewünschten Höhe sowie Breite aufgebaut werden kann, muss der Laserstrahl 22 neu eingestellt werden. Dies geschieht im vorliegenden Fall durch Veränderung der Fokuslage F₃ des Laserstrahls 22. Die Referenzebene, von der aus sich die zweite Metallschicht M₂ entwickeln soll, ist nicht mehr die Oberfläche 12 des Laminierwerkzeugs 10, sondern die Oberseite der Metallschicht M₁. Diese zweite Referenzebene ist mit R₂ gekennzeichnet. Nachdem das bereits beschriebene Verfahren analog zur Erzeugung der zweiten Metallschicht M₂ angewendet worden ist, können beliebig viele weitere Metallschichten aufeinander aufgebaut werden und somit beliebige Ausgestaltungen von lichtbeugenden Strukturen erzeugt werden. Nach Erzeugung der einzelnen Metallschichten M₁, M₂ wird der Fotoresistlack 20 entfernt, so dass die Metallschichten M₁, M₂ die lichtbeugenden Strukturen 1, 2 bilden.

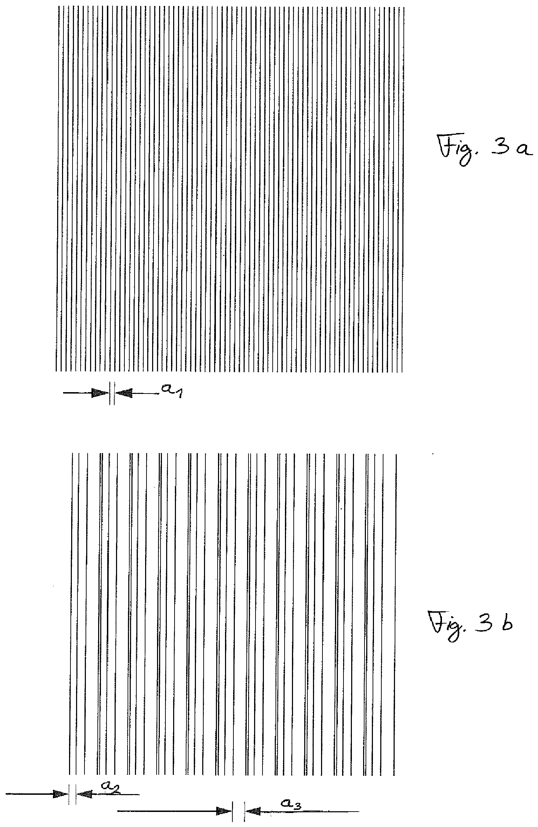

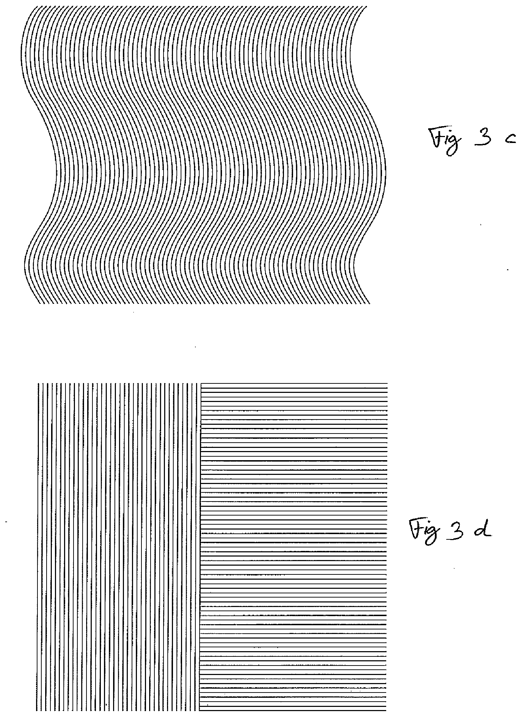

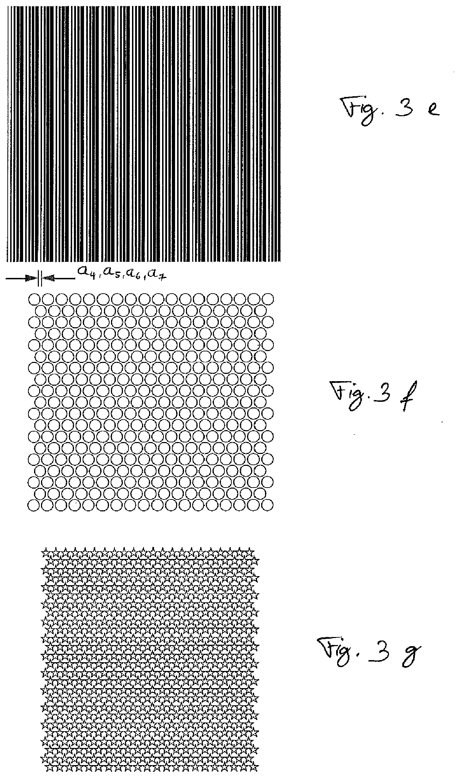

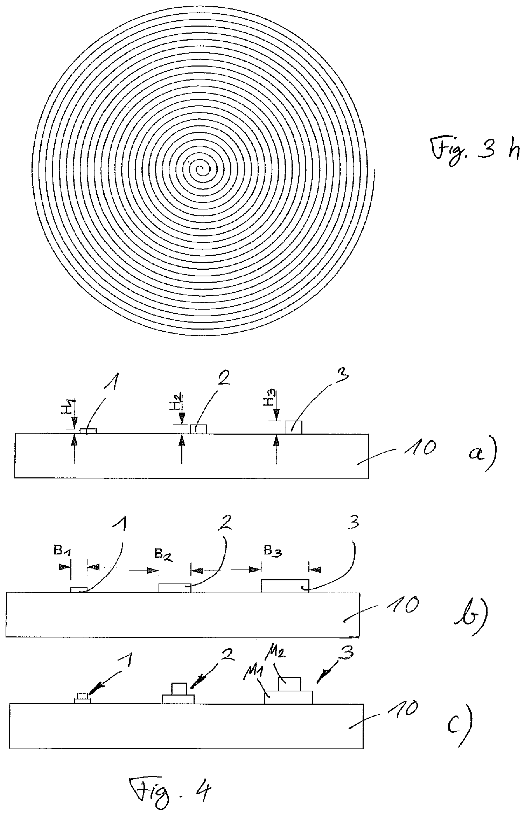

In den Figuren 3a bis 3h sind beispielhafte Ausgestaltungsformen für lichtbeugende Strukturen in einer schematischen Draufsicht auf ein Laminierwerkzeug dargestellt. Gemäß Figur 3a verlaufen die lichtbeugenden Strukturen geradlinig und parallel zueinander in einem konstanten Abstand a₁. Gemäß Figur 3b verlaufen die lichtbeugenden Strukturen ebenfalls gradlinig und parallel, zwischen den einzelnen Linien liegen jedoch vier unterschiedliche Abstände vor, die sich in einer regelmäßigen Abfolge wiederholen. Beispielhaft sind zwei Abstände a₂ und a₃ dargestellt. Gemäß Figur 3c verlaufen die lichtbeugenden Strukturen parallel in einem konstanten Abstand zueinander, jedoch wellenförmig.

Gemäß Figur 3d verlaufen die lichtbeugenden Strukturen abschnittsweise geradlinig und parallel zueinander, wohingegen in einem anderen Abschnitt die Anordnung um 90° versetzt zum ersten Abschnitt erzeugt worden ist. Alle lichtbeugenden Strukturen sind in ihrem Abschnitt untereinander gleich beabstandet. In Figur 3e ist ein ähnliches Muster wie in Figur 3b dargestellt, bei dem jedoch die Breite der lichtbeugenden Strukturen in regelmäßigen Abständen variiert. Es sind vier unterschiedliche Breiten dargestellt, was dazu führt, dass die Abstände a₄ bis a₇ ebenso variieren. Die lichtbeugenden Strukturen können gemäß den Figuren 3f bis 3h jede beliebige Form aufweisen, so sind voneinander beabstandete Kreise oder Sterne ebenso erzeugbar wie eine spiralförmig verlaufende Struktur.

In Figur 4a bis c sind schematisch verschiedene Seitenansichten von Laminierwerkzeugen 10 mit unterschiedlichen lichtbeugenden Strukturen 1 bis 3 dargestellt. Gemäß Figur 4a weisen die lichtbeugenden Strukturen 1 bis 3 eine konstante Breite sowie unterschiedliche Höhen H₁, H₂, H₃ auf. Die lichtbeugenden Strukturen 1 bis 3 gemäß Figur 4b weisen jeweils unterschiedliche Höhen sowie unterschiedliche Breiten B₁, B₂, B₃ auf. Die lichtbeugenden Strukturen 1 bis 3 gemäß Figur 4c bestehen aus jeweils zwei Metallschichten M₁ und M₂ und weisen untereinander unterschiedliche Höhen sowie Breiten auf.

### Bezugszeichenliste

- 1: linienförmige Erhöhung
- 2: linienförmige Erhöhung
- 3: linienförmige Erhöhung

- 10: Laminierwerkzeug
- 11: Oberseite
- 12: Oberfläche

- 20: Fotoresistlack
- 22: Laserstrahl

- aᵢ: Abstand
- di: Schichtdicke
- B₁-B₃: Breite der linienförmigen Erhöhung
- Fᵢ: Fokuslage des Laserstrahls
- H₁-H₃: Höhe der linienförmigen Erhöhung
- Mᵢ: Metallschicht
- R₁: Referenzebene
- R₂: Referenzebene

## Patentansprüche

1. Verfahren zur unmittelbaren Erzeugung lichtbeugender Strukturen (1, 2, 3) auf einem Laminierwerkzeug (10) mit einer Oberseite (11), deren Oberfläche (12) als Referenzebene definiert wird, bei dem die Strukturen (1, 2, 3) linienförmige Erhöhungen sind, die gegenüber der Referenzebene unterschiedliche Höhen (H₁, H₂, H₃) von 100 bis 3500 nm, bevorzugt von 200 bis 600 nm, aufweisen und ausschließlich durch galvanisches Aufbringen von mindestens zwei Metallschichten (M₁, M₂) auf die Oberseite (11) erzeugt werden, indem:
a) die Oberfläche (12) zunächst mit einem Fotoresistlack (20) beschichtet wird,
b) mittels eines Laserstrahls (22) der Fotoresistlack (20) linienförmig belichtet wird,
c) die belichteten Linien in einem Entwicklungsbad entwickelt und bis auf die Oberfläche (12) an den Stellen entfernt werden, an denen Strukturen (1, 2, 3) ausgebildet werden sollen,
d) anschließend die entwickelten Linien galvanisch mit einer ersten Metallschicht (M₁) beschichtet werden,
e) nach der ersten Beschichtung die Oberseite (11) erneut mit einem Fotoresistlack (20) beschichtet wird,
f) mittels eines Laserstrahls (22) der Fotoresistlack (20) zumindest bei einem Teil der linienförmig aufgebrachten ersten Metallschicht (M₁) belichtet wird,
g) die belichteten linienförmigen Bereiche in einem Entwicklungsbad entwickelt werden,
h) anschließend die entwickelten linienförmigen Bereiche mit einer zweiten Metallschicht (M₂) galvanisch beschichtet werden und
i) die Schritte e) bis h) so oft wiederholt werden, bis eine positive Struktur (1, 2, 3) vollständig in der gewünschten Weise aufgebaut ist.

2. Verfahren zur unmittelbaren Erzeugung lichtbeugender Strukturen (1, 2, 3) auf einem Laminierwerkzeug (10) mit einer Oberseite (11), deren Oberfläche (12) als Referenzebene definiert wird, bei dem die Strukturen (1, 2, 3) linienförmige Vertiefungen sind, deren seitliche Begrenzungswände gegenüber der Referenzebene unterschiedliche Höhen von 100 bis 3500 nm, bevorzugt von 200 bis 600 nm, aufweisen und ausschließlich durch galvanisches Aufbringen von mindestens zwei Metallschichten (M₁, M₂) auf die Oberseite (11) erzeugt werden, indem:
a) die Oberfläche (12) zunächst mit einem Fotoresistlack (20) beschichtet wird,
b) mittels eines Laserstrahls (22) der Fotoresistlack (20) linienförmig belichtet wird,
c) die belichteten Stellen in einem Entwicklungsbad entwickelt und bis auf die Oberfläche (12) entfernt werden, wobei an den Stellen, an denen die Strukturen ausgebildet werden sollen, der Fotoresistlack (20) nicht entfernt wird,
d) anschließend die entwickelten Stellen galvanisch mit einer ersten Metallschicht beschichtet werden,
e) nach der ersten Beschichtung die Oberseite (11) erneut mit einem Fotoresistlack (20) beschichtet wird,
f) mittels eines Laserstrahls (22) der Fotoresistlack (20) zumindest bei einem Teil der aufgebrachten ersten Metallschicht (M₁) belichtet wird,
g) die belichteten Bereiche in einem Entwicklungsbad entwickelt werden,
h) anschließend die entwickelten Bereiche mit einer zweiten Metallschicht (M₂) galvanisch beschichtet werden und
i) die Schritte e) bis h) so oft wiederholt werden, bis eine negative Struktur vollständig in der gewünschten Weise aufgebaut ist.

3. Verfahren nach Anspruch 1 oder 2, **dadurch gekennzeichnet, dass** die Breite (B₁, B₂, B₃) der Strukturen (1, 2, 3) 500 nm bis 10 µm beträgt.

4. Verfahren nach einem der vorstehenden Ansprüche, **dadurch gekennzeichnet, dass** die Strukturen (1, 2, 3) parallel zueinander in einem Abstand (a) von 3 bis 20 µm erzeugt werden.

5. Verfahren nach einem der vorstehenden Ansprüche, **dadurch gekennzeichnet, dass** der Fotoresistlack (20) in einer Schichtdicke (d) von weniger als 10 µm aufgebracht wird.

6. Verfahren nach einem der vorstehenden Ansprüche, **dadurch gekennzeichnet, dass** die Beschichtung mit Fotoresistlack (20) in einem Tauchbad erfolgt.

7. Verfahren nach einem der Ansprüche 1 bis 5, **dadurch gekennzeichnet, dass** die Beschichtung mit Fotoresistlack (20) in einem Spincoater-Verfahren erfolgt.

## Claims

1. A method for directly producing light-diffracting structures (1,2,3) on a laminating tool (10) with a top side (11), whose surface (12) is defined as a reference plane, in which the structures (1,2,3) are linear elevations which have different heights (H₁, H₂, H₃) of 100 to 3500 nm, preferably 200 to 600 nm, with respect to the reference plane and are produced exclusively by electrodeposition of at least two metal layers (M₁, M₂) on the top side (11), in that:
a) the surface (12) is first coated with a photoresist (20),
b) the photoresist (20) is exposed linearly by means of a laser beam (22),
c) the exposed lines are developed in a developing bath and removed down to the surface (12) at the places where the structures (1,2,3) are to be formed,
d) the developed lines are then galvanically coated with a first metal layer (M₁),
e) the top side (11) is re-coated with a photoresist (20) following the first coating,
f) the photoresist (20) is exposed by means of a laser beam (22) at least in one part of the linearly applied first metal layer (M1),
g) the exposed linear areas are developed in a developing bath,
h) the developed linear areas are then galvanically coated with a second metal layer (M₂) and
i) the steps e) to h) are repeated until a positive structure (1,2,3) is completely built up in the desired way.

2. A method for directly producing light-diffracting structures (1,2,3) on a laminating tool (10) with a top side (11), whose surface (12) is defined as a reference plane, in which the structures (1,2,3) are linear depressions whose lateral boundary walls have different heights of 100 to 3500 nm, preferably 200 to 600 nm, with respect to the reference plane and are produced exclusively by electrodeposition of at least two metal layers (M₁, M₂) on the top side (11), in that:
a) the surface (12) is first coated with a photoresist (20),
b) the photoresist (20) is exposed linearly by means of a laser beam (22),
c) the exposed places are developed in a developing bath and removed down to the surface (12), wherein the photoresist (20) is not removed at the places at which the structures are to be formed,
d) the developed places are then galvanically coated with a first metal layer,
e) the top side (11) is re-coated with a photoresist (20) following the first coating,
f) the photoresist (20) is exposed by means of a laser beam (22) at least in one part of the applied first metal layer (M1),
g) the exposed areas are developed in a developing bath,
h) the developed areas are then galvanically coated with a second metal layer (M₂) and
i) the steps e) to h) are repeated until a negative structure is completely built up in the desired way.

3. The method according to claim 1 or 2, **characterised in that** the width (B₁, B₂, B₃) of the structures (1,2,3) is 500 nm to 10 µm.

4. The method according to one of the preceding claims, **characterised in that** the structures (1,2,3) are produced parallel to one another at a distance (a) of 3 to 20 µm.

5. The method according to one of the above claims, **characterised in that** the photoresist (20) is applied in a layer thickness (d) of less than 10 µm.

6. The method according to one of the preceding claims, **characterised in that** the coating is done with photoresist (20) in a dip tank.

7. The method according to one of the claims 1 to 5, **characterised in that** the coating is done with photoresist (20) using a spin coater method.

## Revendications

1. Procédé de génération directe de structures diffractant la lumière (1, 2, 3) sur un outil de stratification (10) ayant une face supérieure (11) dont la surface (12) est définie comme plan de référence,
dans lequel
les structures (1, 2, 3) sont des surélévations linéaires qui ont des hauteurs différentes (H₁, H₂, H₃) de 100 à 3500 nm, de préférence de 200 à 600 nm, par rapport au plan de référence et qui sont générées exclusivement par application galvanique d'au moins deux couches métalliques (M₁, M₂) sur la face supérieure (11) du fait que :
a) tout d'abord la surface (12) est revêtue d'une laque photorésistante (20),
b) au moyen d'un faisceau laser (22), la laque photorésistante (20) est exposée de manière linéaire,
c) les lignes exposées sont développées dans un bain de développement et enlevées jusqu'à la surface (12) aux emplacements où les structures (1, 2, 3) doivent être formées,
d) puis les lignes développées sont revêtues galvaniquement d'une première couche métallique (M₁),
e) après le premier revêtement, la face supérieure (11) est revêtue de nouveau d'une laque photorésistante (20),
f) au moyen d'un faisceau laser (22), la laque photorésistante (20) est exposée au moins pour une partie de la première couche métallique (M₁) appliquée en forme linéaire,
g) les zones linéaires exposées sont développées dans un bain de développement
h) puis les zones linéaires développées sont revêtues galvaniquement d'une seconde couche métallique (M₂), et
i) les étapes e) à h) sont répétées aussi souvent jusqu'à ce qu'une structure positive (1, 2, 3) soit établie complètement de la manière désirée.

2. Procédé de génération directe de structures (1, 2, 3) diffractant la lumière sur un outil de stratification (10) ayant une face supérieure (11) dont la surface (12) est définie comme plan de référence,
dans lequel
les structures (1, 2, 3) sont des dépressions linéaires dont les parois de délimitation latérales ont des hauteurs différentes de 100 à 3500 nm, de préférence de 200 à 600 nm, par rapport au plan de référence et qui sont générées exclusivement par application galvanique d'au moins deux couches métalliques (M₁, M₂) sur la face supérieure (11) du fait que :
a) tout d'abord la surface (12) est revêtue d'une laque photorésistante (20),
b) au moyen d'un faisceau laser (22), la laque photorésistante (20) est exposée de manière linéaire,
c) les emplacements exposés sont développés dans un bain de développement et enlevés jusqu'à la surface (12), et aux emplacements où les structures (1, 2, 3) doivent être formées, la laque photorésistante (20) n'est pas enlevée,
d) puis les emplacements développés sont revêtus galvaniquement d'une première couche métallique,
e) après le premier revêtement, la face supérieure (11) est revêtue de nouveau d'une laque photorésistante (20),
f) au moyen d'un faisceau laser (22), la laque photorésistante (20) est exposée au moins pour une partie de la première couche métallique (M₁) appliquée,
g) les zones exposées sont développées dans un bain de développement,
f) puis les zones développées sont revêtues galvaniquement d'une seconde couche métallique (M₂), et
i) les étapes e) à h) sont répétées aussi souvent jusqu'à ce qu'une structure négative soit établie complètement de la manière désirée.

3. Procédé selon la revendication 1 ou 2,
**caractérisé en ce que** la largeur (B₁, B₂, B₃) des structures (1, 2, 3) est de 500 nm à 10 µm.

4. Procédé selon l'une des revendications précédentes,
**caractérisé en ce que** les structures (1, 2, 3) sont générées parallèlement les unes aux autres à une distance (a) de 3 à 20 µm.

5. Procédé selon l'une des revendications précédentes,
**caractérisé en ce que** la laque photorésistante (20) est appliquée en une épaisseur de couche (d) inférieure à 10 µm.

6. Procédé selon l'une des revendications précédentes,
**caractérisé en ce que** le revêtement avec la laque photorésistante (20) est effectué dans un bain d'immersion.

7. Procédé selon l'une des revendications 1 à 5,
**caractérisé en ce que** le revêtement avec la laque photorésistante (20) est réalisé par un procédé d'enduction par centrifugation ("spincoater").
